Europäisches Patentamt

European Patent Office

Office européen des brevets

(11) Publication number: 0 240 269
A2

(12) EUROPEAN PATENT APPLICATION

(21) Application number: 87302687.6

(22) Date of filing: 27.03.87

(51) Int. Cl.³: B 60 C 11/11
B 60 C 11/10

(30) Priority: 01.04.86 JP 47058/86

(43) Date of publication of application:
07.10.87 Bulletin 87/41

(84) Designated Contracting States:
AT BE CH DE ES FR GB GR IT LI LU NL SE

(71) Applicant: Masuda, Koji
43-15 Takashimadaira-1 Itabashi-ku
Tokyo 175(JP)

(72) Inventor: Masuda, Koji
43-15 Takashimadaira-1 Itabashi-ku
Tokyo 175(JP)

(74) Representative: Sturt, Clifford Mark
MARKS & CLERK 57-60 Lincoln's Inn Fields
London WC2A 3LS(GB)

(54) Non-skid tyre.

(57) The present invention relates to a non-skid tyre (10), particularly for use on ice and snow covered roadways, in which the disadvantage of noisy operation on clear roadways is avoided. Thus, in a tyre (10) having a plurality of spaced-apart suction means (24) each surrounded by a recess (26), the invention provides means, such as channels (32), by which air in said recesses (26) avoids compression as the tyre (10) progresses along a roadway free of a snow or ice covering.

FIG.1.

Croydon Printing Company Ltd.

M&C FOLIO: 799P53276

WANGDOC: 0736s

## NON-SKID TYRE

The present invention relates to non-skid tyres, and more particularly to an improved tyre for use on ice or snow covered surfaces.

It is, of course, well known that snow and ice covered surfaces present a substantially reduced coefficient of friction and for use on such surfaces the lateral stability of a tyre is especially important. A number of non-skid devices have been proposed in order to provide improved lateral stability on ice and snow covered surfaces. Most well known are the use of chains in combination with conventional tyres and the use of special tyres which incorporate metal studs in the tread pattern. There are a number of disadvantages associated with such non-skid devices and these disadvantages lead to the invention of a tyre tread on the roadway bearing surface of which are provided a plurality of spaced-apart means for establishing suction between the tread and the ice or snow on a roadway. Japanese Utility Model Application No. 58-173797 and a corresponding U.S. Patent to Koji Masuda describes the invention and its advantages over the previously known anti-skid devices. Despite the substantial benefits provided by the new tread ........................

configuration it has been found that a number of characteristics of the tyre incur disadvantages which have detracted from its widespread adoption. Most significantly it has been found that the new tread configuration is unacceptably noisy in operation when in contact with surfaces which are free of ice and snow.

With a view to providing an improved arrangement, the present invention provides a tyre for a vehicle in which the radially outward and roadway bearing peripheral surface of the tyre is provided with a plurality of spaced-apart means for establishing suction with a snow or ice covering on a roadway, the suction means each being surrounded by a respective recess characterised by means by which air in said recesses avoids compression as the tyre progresses along a roadway free of a snow or ice covering.

Embodiments of the invention will now be described by way of example only and with reference to the accompanying drawings, in which :

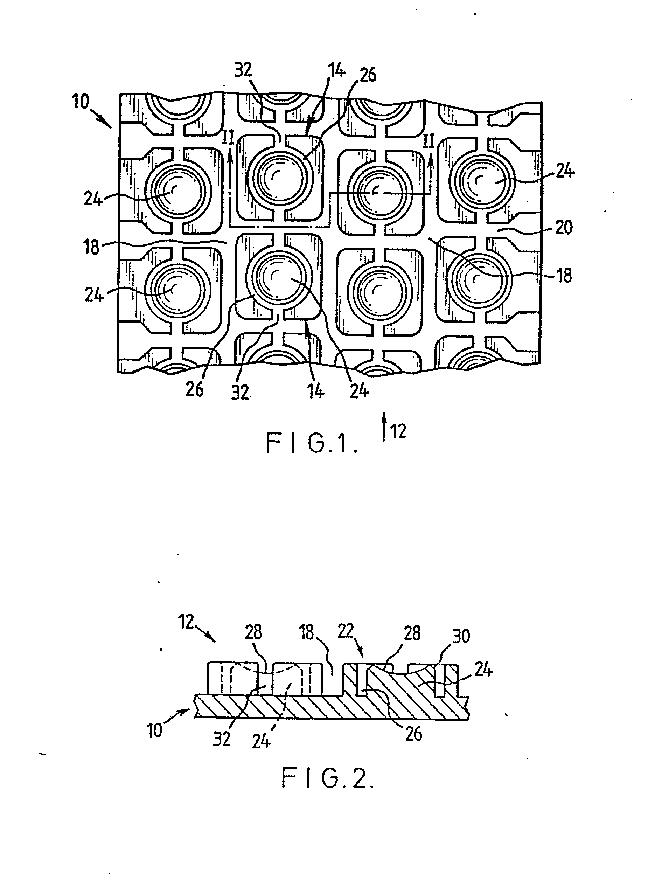

Figure 1, is a schematic fragmentary plan view of the tread of a tyre forming an embodiment of the invention, and

Figure 2, is a partial cross-sectional view of the tyre tread shown in figure 1 and taken along line II-II.

In the drawings, a tyre 10 is illustrated which may be moulded using conventional techniques and which may be of any appropriate basic construction, such as radial or cross-ply.

The tyre 10 carries a tread 12 on the radially outward and roadway bearing surface thereof. As illustrated, the tread 12 has four rows of tread sections which extend circumferentially around the tyre. Each tread section 14 is basically rombic but with a height, that is depth of tread, of approximately half of the dimension of the other two sides which are equal and of length L. The corners of the square face of each section 14 are rounded. Additionally, the corners which form the lateral edges of the tread 12 are cut-away to provide a concave groove 16 extending along the depth of the tread at these locations. The depth of the laterally outer-most sections increases so as to compensate for the radius of the base of the tread at its junction with the walls of the tyre. The Sections 14 of each row are off-set with respect to the sections of the neighbouring rows. Thus, while the channels 18 between the rows are continuous circumferentially around the tyre, the channels 20 which extend laterally across the width of the tyre between sections 14 are discontinuous. Channels 18 have a width of about 1/6L.

Channels 20 have a width approximately equal to two-thirds of the width of channels 18.

Centrally of each thread section 14 is a cylindrical recess 22 extending to the same depth as channels 18 and 20. Rising concentrally from the base of each recess 22 is a cylindrical column 24 which has a height of between three-quarters and seven-eighths of the depth of the recess. The recess 22 has a diameter approximately equal to two-thirds of the length of one side of the square face of section 14, L. Column 24 has a diameter of about 1/2L. Thus, column 24 is surrounded by a annular channel 26 which has a width of about 1/12L. The centre of the free face of each column 24 is formed as a dish shaped surface 28. Surface 28 extends towards the base of the column with a maximum depth approximately equal to one quarter of the height of the column. Dish shaped surface 28 has a diameter approximately equal to three-quarters of the diameter of the column 24. The remaining surface of the free face of the column 24, annular ring 30, slopes downwardly towards the cylindrical surface of the column, at angle of about 10 to 15 degrees.

As tyre 10 rolls along a roadway, sequential portions of the tread 12 are, of course, brought into contact with and then separated from the roadway. On a normal, flat, roadway the square face of each tread section 14 does, in turn, contact the roadway but surfaces 28 and 30 at the free end of the column 24 do not contact the roadway. There is, nonetheless, a compression of the tread section 14 radially inwards. This compression results in the air in annular channel 26, surrounding column 24, being compressed. This compressed air is released as the tread section 14 moves out of contact with the roadway surface. It has been found that it is this compression of air and its subsequent release which results in the undesirably noisy operation of the tyre on normal roadway surfaces. The noise is not so noticeable when the tyre travels along an ice or snow covered roadway. There may be several reasons for this, one of which may be speed of travel.

The present invention provides an arrangement in which the above described compression of air, and thus the resulting undesirable noise, is avoided. As shown in the accompanying drawings, the annular channel 26 is open to laterally extending channels 20 via short channels 32. Respective channels 32 extend away from annular channel 26 in each of the two circumferential directions. Channels 32 are of the same depth as channels 18 and 20 and have a width of approximately half of the width of channels 18.

It will be appreciated that as each tread section 14 comes into contact with the roadway surface, the air which would previously have been compressed escapes via channels 32, 18 and 20. Thus, the undesirable noise of operation on normal roadway surfaces is avoided. Efficiency of operation of the tyre tread on ice and snow covered roadway surfaces is not, however, degraded. On ice and snow covered roadway surfaces, suction is established by the dish shaped surface 28 of column 24 of each section 14. This suction is not affected by provision of channels 32.

While one embodiment of the invention has been described and illustrated, it will be apparent to persons skilled in the art that various modifications can be made without departing from the scope of the present invention. One example of such a modification is replacement of channels 32 by one or more passages. The above stated realtive dimensions of the configuration of the tread are not critical, although they are preferred.

CLAIMS:

1. A tyre (10) for a vehicle in which the radially outward and roadway bearing peripheral surface (12) of the tyre (10) is provided with a plurality of spaced-apart means (24) for establishing suction with a snow or ice covering on a roadway, the suction means (24) each being surrounded by a respective recess (26) characterised by means (32) by which air in said recesses (26) avoids compression as the tyre (10) progresses along a roadway free of a snow or ice covering.

2. A tyre (10) as claimed in claim 1, wherein said suction means comprise respective tread sections (14) separated from each other by intercommunicating circumferential and lateral channels (18,20), each tread section (14) having a central element (24) surrounded by said respective recess (26), each central element (24) having an end face in-set from said peripheral surface of the tyre (12) said end face having an inwardly dished surface (28), characterised in that said means by which air compression is avoided comprises at least one passage connecting said respective recess to said intercommuncating channels (18,20).

3. A tyre (10) as claimed in claim 1, wherein said

8

suction means comprise respective tread sections (14) separated from each other by intercommuncating circumferential and lateral channels (18, 20) each tread section (14) having a central element (24) surrounded by said respective recess (26), each central element (24) having an end face in-set from said peripheral surface of the tyre (12) said end face having an inwardly dished surface (28), characterised in that said means by which air compression is avoided comprises at least one channel (32) connecting said respective recess to said intercommunicating channels (18, 20).

4. A tyre (10) as claimed in claim 3, characterised in that said at least one channel (32) extends in a direction substantially circumferential of the tyre (10).

5. A tyre (10) as claimed in claim 3 or 4, characterised in that said means by which air compression is avoided comprises two channels (32) which both connect said respective recess to said intercommunicating channels (18, 20), said two channels (32) extending in opposite directions both substantially circumferential of the tyre (10).

0240269

FIG.1.

FIG.2.